## Europäisches Patentamt
## European Patent Office
## Office européen des brevets

(19)

(11) Numéro de publication: **0 033 288**

**A2**

(12)

# DEMANDE DE BREVET EUROPEEN

(21) Numéro de dépôt: **81400141.8**

(51) Int. Cl.³: **C 03 C 17/245**

(22) Date de dépôt: **29.01.81**

(30) Priorité: **29.01.80 JP 8237/80**

(43) Date de publication de la demande:
**05.08.81 Bulletin 81/31**

(84) Etats contractants désignés:
**AT BE CH DE FR GB IT LI LU NL SE**

(71) Demandeur: **SAINT-GOBAIN VITRAGE**
**63, rue de Villiers**
**F-92209 Neuilly Sur Seine(FR)**

(72) Inventeur: **Kawahara, Hideo**
**47-5-205, 2 Chome Minamisakurazuka**
**Toyonaka-shi Osaka(JP)**

(72) Inventeur: **Fujiwara, Kenji**
**14 Koshienguchi 4-chome**
**Nishinomiya-shi Hyogo-ken(JP)**

(74) Mandataire: **Eudes, Marcel et al,**
**Saint-Gobain Recherche 39 Quai Lucien Lefranc**
**F-93304 Aubervilliers Cedex(FR)**

(54) **Fabrication de verres revêtus d'un film d'oxydes métalliques.**

(57) La présente invention concerne le revêtement de surfaces de verre par un film d'oxydes métalliques.

Elle propose un procédé dans lequel on pulvérise sur la surface du verre chaud une solution de composés organométalliques dissous dans des solvants organiques, ces composés organométalliques étant au moins deux complexes métalliques ayant des coordinats différents, en particulier au moins un complexe métallique ayant pour coordinat un $\beta$-dicétone possédant de 6 à 8 carbones et un complexe métallique ayant pour coordinat une $\beta$-dicétone à 5 carbones.

La présente invention permet d'obtenir sur du verre des revêtements plus réguliers et plus résistants.

**EP 0 033 288 A2**

FABRICATION DE VERRES REVETUS D'UN FILM

D'OXYDES METALLIQUES

La présente invention concerne le revêtement de surfaces de verre par un film d'oxydes métalliques. Plus précisément, elle porte sur un procédé de revêtement de surfaces de verre par un film d'oxydes métalliques à forte adhérence et d'une épaisseur régulière dans lequel on pulvérise sur le verre chaud une solution de plus de 2 composés organométalliques ayant différents coordinats.

Jusqu'ici, pour obtenir un film d'oxydes métalliques sur des surfaces de verre, on pulvérise sur la surface du verre chauffé à haute température une solution d'acétylacétonates dissous dans un solvant organique ce qui provoque leur décomposition thermique sur le verre.

Ces acétylacétonates métalliques sont solubles dans des solvants organiques tels que des solvants à base d'alcools inférieurs, d'esters d'acides inférieurs, d'hydrocarbures aromatiques ou aliphatiques, ou d'un mélange de ces solvants. Mais la solubilité reste très faible. Avec ce procédé, lorsqu'on veut déposer un film relativement épais, il faut une quantité importante de tels solvants, ce qui entraîne une baisse de la température de la surface du verre et de ce fait, une baisse d'efficacité de la décomposition thermique de l'acétylacétonate métallique.

Cela se traduit par une limitation des possibilités d'augmentation d'épaisseur du film et une diminution de son adhérence sur le verre donc une mauvaise résistance à l'abrasion des surfaces de verre ainsi revêtues.

En outre, si pour obtenir le meilleur rendement possible on emploie une solution d'acétylacétonates métalliques proche de la saturation, à basse température notamment, il se produit dans le réservoir de stockage de la solution une cristallisation qui entraîne une diminution de concentration de la solution et un colmatage des pistolets pulvérisateurs. Cette méthode de pulvérisation d'une solution d'acétylacétonates métalliques dans des solvants organiques du type cité ci-dessus présente donc des inconvénients.

D'autre part, on a essayé d'employer d'autres complexes organo métalliques, en l'occurrence des β- dicétonates à 6 ou 7 carbones, plus solubles dans les solvants organiques, pour augmenter la concentration des solutions pulvérisées et réduire ainsi la chute de température du verre. Mais l'augmentation du nombre de carbones fait que la teneur en métal n'augmente pas autant que la solubilité et elle élève la température de décomposition, de sorte que le rendement global de l'opération est bas, comparé à celui obtenu avec les acétylacétonates. Le défaut le plus grave de ce procédé est que des irrégularités qui engendrent des variations de teinte visibles à l'oeil nu se forment facilement dans le film déposé.

L'invention cherche à éliminer ces défauts des méthodes classiques et propose de fabriquer des verres revêtus d'un film d'oxydes métalliques à adhérence élevée et présentant moins d'irrégularités de teinte et d'épaisseur.

Ceci est obtenu en employant une solution d'au moins deux sels métalliques complexes ayant des coordinats différents.

Plus précisément l'invention propose un procédé de revêtement de verres par un film d'oxydes métalliques selon lequel on pulvérise sur la surface du verre chaud une solution de composés organométalliques comprenant au moins un complexe métallique ayant pour coordinat une β. dicétone possédant de 6 à 8 carbones et un sel métallique complexe ayant pour coordinat une β. dicétone à 5 carbones.

En tant que β- dicétone à 5 carbones, l'acétylacétonate est le plus approprié. En tant que β. dicétones possédant de 6 à 8 carbones, on peut employer des β - dicétones à 6 carbones telles que la propionylacétone, des β-dicétones à 7 carbones telles que le dipropionylméthane, l'isobutirylacétone normale et des β-dicétones à 8 carbones telles que l'isovalérylacétone, le propionylbutyrylméthane ou la valérylacétone normale.

Les complexes métalliques utilisés selon cette invention sont des $\beta$-dicétones coordinées aux métaux de transition tels que fer, cobalt, nickel ou chrome. Par exemple, il s'agit des acétylacétonates de fer, de cobalt, de nickel, ou encore de chrome, des propionylacétonates de chrome, de cobalt, de fer, du fer-dipropionylméthane, du cobalt- dipropionylméthane, du chrome-dipropionyle, des isovalérylacétonates de fer, de cobalt, de chrome, de nickel, etc... On peut fabriquer ces complexes métalliques selon les méthodes connues.

Selon cette invention, il faut utiliser au moins l'un des com plexes métalliques précités ayant pour coordinat une $\beta$-dicétone à 5 carbones et l'un des complexes métalliques précités ayant pour coordinat une $\beta$-dicétone possédant de 6 à 8 carbones. A partir du moment où cette condition minimale est satisfaite, on peut augmenter le nombre de complexes et utiliser plus de deux complexes métalliques ayant comme coordinat une $\beta$-dicétone à 5 carbones, dont les métaux ou les coordinats sont différents. Egalement, on peut utiliser à la fois plus de deux complexes métalliques ayant pour coordinat une $\beta$-dicétone possédant de 6 à 8 carbones, de métaux et/ou de coordinats différents ayant ou non le même nombre de carbones.

Ces complexes métalliques utilisés selon cette invention sont dans tous les cas pulvérisés sur la surface du verre où ils se transforment finalement en oxydes métalliques. Les caractéristiques optiques et la résistance à l'abrasion des films finalement obtenus dépendent des types de métaux utilisés. Par exemple, il est connu que les oxydes de fer et de chrome procurent une très forte résistance à l'usure de la surface.

Par conséquent, le nombre de métaux est 1, 2 ou plus de 2 et il varie selon les caractéristiques désirées du film. Par exemple, les métaux contenus dans les sels complexes métalliques sont sélectionnés de façon que le film obtenu contienne de 25 à 100 % en poids d'oxyde de cobalt et de 0 à 75 % en poids d'oxyde de fer et/ou d'oxydes de chrome.

Les coordinats de ces métaux, utilisés conformément à cette invention, jouent un rôle important quant à la régularité de l'épaisseur et à l'adhérence du film d'oxydes métalliques obtenu et in fluent également sur la solubilité des complexes métalliques dans les solvants organiques et le rendement de la décomposition thermique. Par conséquent, la composition en coordinats des complexes métalliques utilisés, à savoir leur répartition en coordinats possédant 5 carbones et 6 à 8 carbones est déterminée en fonction de ces facteurs. En géné ral il est souhaitable d'utiliser 30 à 70 % en poids de complexes métalliques ayant pour coordinat une $\beta$-dicétone à 5 carbones et 70 à 30 % en poids de complexe métallique ayant pour coordinat une $\beta$-dicétone possédant de 6 à 8 carbones, l'ensemble des deux sels représentant 100 %.

Dans le cas où l'on n'utilise que des sels d'un seul métal, par exemple de cobalt, en tant que complexes métalliques, il est souhaitable d'associer, dans les proportions déjà indiquées, un complexe de cobalt ayant pour coordinat une $\beta$-dicétone à 5 carbones et un autre complexe de cobalt ayant pour coordinat une $\beta$-dicétone à 6 à 8 carbones.

Dans le cas de l'emploi de sels de plusieurs métaux, par exemple un complexe de fer, un complexe de cobalt et un complexe de chrome, on utilise un, deux $\beta$-dicétonates à 5 carbones (ou même plus) par exemple le complexe de fer et/ou le complexe de chrome, et un autre $\beta$-dicétonate possédant de 6 à 8 carbones, par exemple le sel de cobalt, les proportions de $\beta$-dicétonates à 5 carbones et de $\beta$-dicétonate possédant de 6 à 8 carbones étant celles définies précédemment. On peut aussi choisir d'utiliser pour chaque métal un $\beta$-dicétonate à 5 carbones et un $\beta$-dicétonate possédant de 6 à 8 carbones. On peut encore utiliser un, deux sels (ou même plus de deux) ayant chacun pour coordinats une $\beta$-dicétone à 5 carbones et une $\beta$-dicétone possédant de 6 à 8 carbones, l'autre ou les autres sel(s) ayant pour coordinat soit une $\beta$-dicétone à 5 carbones soit une $\beta$-dicétone possédant de 6 à 8 carbones, les proportions définies précédemment étant toujours respectées.

Donc, en résumé, on peut :

- utiliser à la fois des complexes de fer, de cobalt et de chrome,

- une partie au moins de ces complexes métalliques ayant pour coordinat une $\beta$-dicétone possédant de 6 à 8 carbones dans la proportion de 30 à 70 % par rapport à la totalité des sels complexes métalliques.

Avantageusement :

- l'ensemble ou une partie du complexe de fer et/ou du complexe de cobalt a pour coordinat une $\beta$-dicétone possédant de 6 à 8 carbones, et,

- ces complexes de fer et/ou de cobalt représentent 30 à 70 % en poids de l'ensemble des complexes métalliques.

Selon cette invention, les complexes métalliques sont dissous dans des solvants à base d'alcools inférieurs tels que le méthanol, l'éthanol, l'isopropanol, des solvants à base de cétones tels que l'acétone, la méthyléthylcétone, des solvants à base d'esters carboxyliques inférieurs tels que l'acétate d'éthyle, l'acétate de butyle, des solvants à base d'hydrocarbures aliphatiques tels que l'heptane, la ligroïne, des solvants à base d'hydrocarbures aromatiques tels que le benzène, le toluène, le xylène ou des solvants à base d'hydrocarbures aliphatiques halogénés tels que le dichlorométhane. Ils sont commodément utilisés sous forme de solution.

Du fait que les complexes métalliques ayant une $\beta$-dicétone à 5 carbones sont en général difficilement solubles dans des solvants autres que le benzène et le dichlorométhane, ils sont dissous dans un solvant mixte selon nécessité, ceci dépendant de la quantité utilisée.

Selon cette invention, on pulvérise une solution des complexes métalliques dissous dans des solvants organiques sur la surface du verre chaud où se produit la décomposition thermique. On obtient ainsi un verre revêtu d'un film d'oxydes métalliques.

Cette invention est applicable au revêtement de verres fabriqués par le procédé COLBURN, le procédé FLOAT, ou le procédé "ROLL OUT", en pulvérisant une solution des sels appropriés avec un pistolet pulvérisateur installé avant ou à l'entrée du four de recuisson. Cette invention est également applicable au revêtement des verres fabriqués par les procédés FOURCAULT et PITTSBURGH. Grâce à l'emploi des complexes métalliques ayant une $\beta$-dicétone possédant de 6 à 8 carbones, on peut élever la concentration en complexes métalliques dans la solution et diminuer la quantité de cette solution à pulvériser sur le verre. Par conséquent, on peut déposer un film d'oxydes métalliques sur des verres à une température relativement basse, par exemple sur un verre mince ou un verre plat entraîné très rapidement comme dans le procédé FLOAT.

Du fait que l'on utilise à la fois un $\beta$-dicétonate à 5 carbones et un autre possédant de 6 à 8 carbones, on peut obtenir des verres revêtus d'un film d'oxydes métalliques dont l'irrégularité d'épaisseur et par conséquent l'irrégularité de teinte restent très faibles.

On illustre ci-après cette invention par des exemples non limitatifs.

EXEMPLE

2 pistolets de pulvérisation faisant 16 cycles de va et vient par minute dans une direction perpendiculaire à la direction de défilement du ruban de verre sortant d'un four de flottage sont installés entre ce four et l'étenderie. A l'aide de ces pistolets, on pulvérise sur le verre une solution de complexes métalliques (composition donnée tableau I) dans du toluène. L'épaisseur du verre est de 4 mm, sa vitesse de déplacement est 7,2 mètres par minute, sa température dans la zone de pulvérisation est d'environ 570 °C.

On cherche à fabriquer des verres réfléchissant le rayonnement calorifique, ayant les caractéristiques optiques suivantes :

- taux de transmission des radiations visibles : 42 %
- longueur d'onde dominante : 579 nm
- taux de réflexion des radiations visibles : 34 %
- longueur d'onde dominante : 540 nm

Dans le ruban de verre traité, on découpe des échantillons qu'on soumet à des tests de résistance à l'usure par abrasion et sur lesquels on regarde les irrégularités de teinte. Les résultats sont indiqués dans le tableau I.

Pour étudier la résistance à l'usure des films ainsi obtenus, on utilise un appareil d'essai chargé à 600 g/cm, tournant à 300 tours/mn, ayant un diamètre de 70 mm, une section de charge de 1 cm$^2$ et ayant pour toile abrasive une gaze en 6 plis imprégnée d'abrasif pour le verre (marque GLASTER). On exprime cette résistance à l'usure en nombre de tours au bout desquels on observe à l'oeil nu une décoloration du film, les observations étant faites tous les 50 tours.

D'autre part, l'irrégularité de la teinte a été appréciée à l'oeil nu en comparaison avec 10 échantillons dont la différence de teinte est cotée 0,5. Les verres dont la différence de teinte est cotée inférieure à 2,5 sont commercialisables.

Dans tous les tests précédents, les solutions de complexes de fer, cobalt et chrome dissous dans le toluène ont été employées de façon telle que la proportion en poids de fer, cobalt, chrome soit respectivement de 20, 50, 30.

Dans les exemples 5 et 6, colonne "sel complexe de fer", le rapport entre le poids d'acétylacétonate de fer (C5) et le poids du complexe de fer-dipropionylméthane (C7) est de 1, le rapport entre le poids d'acétylacétonate de fer (C5) et le poids d'isovalérylacétonate de fer (C8) est également de 1. Toujours dans les exemples 5 et 6, mais colonne "sel complexe de cobalt", le rapport pondéral C5/C7 est de 2, et le rapport pondéral C5/C8 est de 2 également.

Les tests 1 et 7 représentent les résultats obtenus avec des so-

0033288

7

lutions pulvérisées classiques et les tests 2 à 6 sont les résultats obtenus avec des solutions selon cette invention.

Il n'a pas été possible d'obtenir un film d'oxydes métalliques ayant les caractéristiques optiques voulues avec les solutions classiques (test 1). En plus, même à une vitesse d'entraînement ralentie du verre plat, la régularité de la teinte était mauvaise. Dans le cas du test 7, on a pu réduire le débit de pulvérisation grâce à la solution concentrée, mais la résistance à l'usure et la régularité de teinte du verre revêtu étaient mauvaises. Par contre, on peut constater qu'en employant les solutions préconisées dans cette description, (tests 2 à 6) il est possible de fabriquer des verres revêtus dont la résistance à l'usure et la régularité de teinte sont meilleures. Les tests 5 et 6 sont particulièrement remarquables pour ce qui concerne :

- le faible débit de pulvérisation

- la forte résistance à l'usure sans irrégularité de la teinte du verre revêtu du film.

TABLEAU I

| N° | Coordinat des sels complexes métalliques [x1] | | | Quantité de sels complexes métalliques dissous à la température ambiante (g/1) | Débit de pulvéri-sation (cc/min) | verres revêtus | |
|---|---|---|---|---|---|---|---|
| | sel complexe de fer | sel complexe de cobalt | sel complexe de chrome | | | résis-tance à l'en-durance (tour) | irrégu-larité de teinte |
| 1 | $C_5$ | $C_5$ | $C_5$ | 100 | [x2] | [x2] | 2.5-3.0 [x3] |
| 2 | $C_5$ | $C_8$ | $C_5$ | 170 | 2100 | 2500 | 1.0-1.5 |
| 3 | $C_5$ | $C_7$ | $C_5$ | 170 | 2100 | 2000 | 1.0-1.5 |
| 4 | $C_5$ | $C_6$ | $C_5$ | 140 | 2400 | 1600 | 1.5-2.0 |
| 5 | $C_5 + C_7$ | $C_5 + C_7$ | $C_5$ | 220 | 1800 | 2800 | 1.5-2.5 |
| 6 | $C_5 + C_8$ | $C_5 + C_8$ | $C5$ | 220 | 1800 | 3000 | 1.5-2.5 |
| 7 | $C_7$ | $C_7$ | $C_7$ | 340 | 1400 | 900 | 2.5-3.5 |

[x1] $C_5$ : acétylacétonate, $C_6$ : propionylacétonate, $C_7$ : dipropionylméthane, $C_8$ : isovalérylacétonate

[x2] Etant donné que la solubilité dans le toluène était trop faible, on n'a pas pu augmenter le débit de pulvé-risation pour obtenir un verre plat voulu à une vitesse d'entraînement du verre plat de 7.2 m/min. Autre-ment dit, quand on a augmenté le débit de pulvérisation, le verre plat a été cassé à cause d'un refroidissement trop brusque.

[x3] Les valeurs ont été relevées à une vitesse d'entraînement du verre de 5.5 m/min.

8

0033288

REVENDICATIONS

1. Procédé de revêtement de surfaces de verre par un film d'oxydes métalliques dans lequel on pulvérise sur la surface du verre chaud une solution de composés organométalliques dissous dans des solvants organiques, caractérisé en ce que l'on utilise en tant que composés organométalliques au moins deux complexes métalliques ayant des coordinats différents.

2. Procédé selon la revendication 1, caractérisé en ce que l'on utilise au moins un complexe métallique ayant pour coordinat une $\beta$-dicétone possédant de 6 à 8 carbones et un complexe métallique ayant pour coordinat une $\beta$-dicétone à 5 carbones.

3. Procédé selon l'une des revendications 1 ou 2, caractérisé en ce qu'il s'agit de sels d'un même métal.

4. Procédé selon l'une quelconque des revendications 1 ou 2, caractérisé en ce qu'il s'agit de sels de métaux différents, notamment du fer, du chrome, et du cobalt.

5. Procédé selon la revendication 4, caractérisé en ce que la solution pulvérisée contient de 30 à 70 % de sels de chaque type de métal.